# EUROPÄISCHE PATENTSCHRIFT

(11) **EP 1 985 183 B1**
(45) Veröffentlichungstag und Bekanntmachung des Hinweises auf die Patenterteilung: **17.06.2009**
(21) Anmeldenummer: 07008433.0
(22) Anmeldetag: 25.04.2007
(51) Int. Cl.: A22C 15/00

(54) **Rauchstockzuführung und Verfahren zum lagegenauen Zuführen eines Rauchstocks**
Smoking stick feed and method for exact feed positioning of a smoking stick
Introduction de barre de fumoir et procédé d'introduction précis d'une barre de fumoir

(43) Veröffentlichungstag der Anmeldung: 29.10.2008
(73) Patentinhaber: Albert Handtmann Maschinenfabrik GmbH & Co. KG, 88400 Biberach (DE)
(72) Erfinder: Liermann, Torsten, 88471 Laupheim (DE); Mayer, Steffen, 71227 Rutesheim (DE); Abele, Benjamin, 73550 Waldstetten (DE)
(74) Vertreter: Grünecker, Kinkeldey, Stockmair & Schwanhäusser Anwaltssozietät

(56) Entgegenhaltungen:
- EP-A1- 0 107 148
- EP-A1- 0 179 528
- DE-A1- 3 635 412
- US-A- 2 616 572
- US-A1- 2005 159 093

## Beschreibung

Die Erfindung betrifft eine Rauchstockzuführung sowie ein Verfahren zum lagegenauen Zuführen eines Rauchstocks gemäß den Oberbegriffen der Ansprüche 1 und 10. Eine Rauchstockzuführung ist z.B. aus US-2005/159093 bekannt.

Bei der industriellen Wurstherstellung werden gefüllte Wurstketten in der Regel mit einem Hänger mit Hilfe von Aufnahmehaken automatisch in Schlaufen aufgehängt. Unter Wurstketten oder Wurstschleifen versteht man hier eine zusammenhängende Ansammlung von Einzelportionen oder auch kontinuierlich gefüllte Wurststränge ohne Unterteilung. Die Wurstschleifen werden dabei beispielsweise von Aufnahmehaken gehalten. Anschließend werden die Würste manuell auf einen Rauchstock geschoben. Dieser wird dann vom Bediener in einen Rauchwagen gehängt. Der Rauchwagen wiederum wird anschließend in eine Räucherkammer geschoben. Die Vielfalt der unterschiedlichen Rauchstöcke, Rauchwagen und Wurstprodukte erschwert eine Automatisierung der Beladung von Rauchstöcken und Rauchwagen erheblich. Daher sind bisher keine automatisierten Systeme im Einsatz. Alternativ zu dieser Vorgehensweise gibt es anstelle der Räucherkammem auch Anlagen, die die Produkte in einen kontinuierlichen Durchlauf räuchern. Wegen den einfacheren Bedingungen zur Automatisierung an kontinuierlichen Anlagen sind hier bereits automatisierte Systeme zur Beschickung und Entladung dieser Anlagen im Einsatz.

Bei besonders einfachen Wurstprodukten in Kunstdärmen und bestimmten Anwendungen wurden bereits Teilvorgänge vereinfacht bzw. teilautomatisiert. So sind Systeme bekannt, die eine Vereinzelung der Rauchstöcke aus einem Haufwerk ermöglichen. Für das Einfädeln der Rauchstöcke in den Rauchstockhänger mittels Greifertechnik sind Systeme bei kontinuierlichen Anlagen bekannt. Diese bestehen aus zwei Greifmodulen, von denen zunächst das eine den Rauchstock an einem Ende aufnimmt. Im nächsten Arbeitsschritt fährt ein Handhabungssystem oder Roboter den Rauchstock in den Hänger ein. Im nächsten Arbeitsgang fährt der Roboter das zweite Greifmodul an den Rauchstock und greift diesen am anderen Ende. So kann dann der Roboter den Rauchstock mitsamt den Produkten aus dem Hänger entnehmen. Mit diesem System lassen sich keine hohen Taktzeiten erreichen. Darüber hinaus müssen die Würste hierbei sehr gleichförmig sein und müssen so aufgehängt sein, dass sie einen Zwischenraum zum Einführen des Rauchstocks freigeben. Dadurch, dass das Greifmodul die Rauchstöcke von einem Förderband entnehmen muss und in die Zwischenräume der Wurstkette einfädeln muss, benötigt dieses Handling sehr viel Zeit, die dem Roboter bei seiner eigentlichen Aufgabe, dem Transportieren der gefüllten Rauchstöcke, beispielsweise zu einem Rauchstockwagen, fehlt. Darüber hinaus gestaltet sich das Einfädeln des Rauchstocks in die Wurstschleifen schwierig, da beim Einfädeln der Rauchstock von nur einem Greifer gehalten wird, so dass der Rauchstock nach unten hängt.

Es ist auch bereits ein manuelles System bekannt, bei dem Rauchstöcke horizontal ausgerichtet an einer vertikal angeordneten Drehscheibe angeordnet sind, wobei durch manuelles Drehen an der Drehscheibe die Wurstschleifen vom Rauchstock gegriffen werden und aus den Haken des Hängers ausgehoben werden. Dieses System konnte sich am Markt nicht durchsetzen, da damit der Personalaufwand für den Betreiber nicht reduziert werden konnte.

Hiervon ausgehend liegt der vorliegenden Erfindung die Aufgabe zugrunde eine Rauchstockzuführung sowie ein entsprechendes Verfahren bereitzustellen, die ein exaktes, schnelles, lagegenaues und schonendes Einbringen der Rauchstöcke in die Wurstschleifen ermöglichen.

Erfindungsgemäß wird diese Aufgabe durch die Merkmale der Ansprüche 1 und 10 gelöst. Gemäß der vorliegenden Erfindung wird eine Rauchstockzuführung bereitgestellt, die es ermöglicht den Rauchstock lagegenau in den Wurstschleifen oder andere in Schleifen auf einem Hänger aufgehängten Produkte zu positionieren. Erfindungsgemäß umfasst die Rauchstockzuführung eine Rauchstockauflage, auf der der Rauchstock zumindest teilweise aufliegt und in Richtung Hänger ausgerichtet wird. Gemäß der vorliegenden Erfindung ist die Rauchstockauflage derart verschiebbar, dass der Rauchstock im Wesentlichen in Längsrichtung aus der Rauchstockzuführung in einen Abnahmebereich des Hängers ausfahrbar ist. Der Abnahmebereich des Hängers ist der Bereich, in dem die Schleifen zur Abnahme angeordnet sind. Dadurch, dass der Rauchstock auf der Rauchstockaufnahme aufliegt, die wiederum in den Hänger bewegt wird, ist der Rauchstock stets korrekt ausgerichtet und kann durch einfaches Verfahren der Auflage bewegt werden.

Der Rauchstock kann dann angehoben werden und zusammen mit den Schleifen entnommen werden. Die Entnahme kann beispielsweise über einen Roboter mit entsprechenden Greifern erfolgen. Es ergibt sich eine Reduktion der Handhabungszeit für den Roboter oder das Handhabungsgerät, durch vom Roboter entkoppeltes Einbringen des Rauchstocks.

Gemäß der vorliegenden Erfindung ist die Auflage als Teil eines Rauchstockeinschubs ausgebildet, wobei der Rauchstockeinschub zusammen mit dem Rauchstock aus der Rauchstockzuführung in den Abnahmebereich bewegbar ist. Dadurch, dass der Rauchstock auf der Auflage in dem Rauchstockeinschub aufliegt kann der Rauchstock auf besonders stabile Art und Weise lagegenau verschoben werden.

Es ist besonders vorteilhaft, wenn die Auflage als mindestens ein auswechselbares Element in dem Rauchstockeinschub gehalten ist. Somit kann beim Einsatz unterschiedlicher Rauchstockarten und Geometrien lediglich das oder die entsprechenden Auflageelemente ausgewechselt werden, die an die Größe und Form des entsprechenden Rauchstocks angepasst sind. Dies kann durch einfaches Einsetzen oder Einstecken der Auflageelemente erfolgen. Somit ist ein einfaches und schnelles Umrüsten gewährleistet.

Vorteilhafterweise weist das vordere, d.h. dem Hänger zugewandte Ende des Einschubs eine integrierte Führungsspitze auf. Dadurch, dass an dem vorderen Ende eine Spitze ausgebildet ist, kann der Rauchstock zusammen mit dem Rauchstockeinschub einfach in die Schleifen eingefädelt werden, ohne die Schleifen zu beschädigen. Auch bei eng zusammenliegenden Schleifen ist ein einfachen Einfädeln möglich. Dadurch, dass die Führungsspitze am Einschub angeordnet ist, verbleibt diese im Einschub, wenn der Rauchstock für weitere Prozessschritte entnommen wird. Dies spart die Prozessschritte, dass eine Führungsspitze an einen Rauchstock aufgesteckt und wieder abgezogen werden muss. Die Führungsspitze steht somit wieder dem nächsten Rauchstock zur Verfügung, der in die Rauchstockzuführung eingeführt wird.

Es ist besonders vorteilhaft, wenn das Auflageelement als integrierte Führungsspitze ausgebildet ist.

Die Auflage kann insbesondere derart ausgebildet sein, dass der Rauchstock zumindest teilweise seitlich und an seinem vorderen Ende, das dem Hänger zugewandt ist, durch die Auflage eingefasst ist. Somit wird der Rauchstock seitlich und nach vorne gehalten und exakt ausgerichtet.

Die Auflage bzw. der Rauchstockeinschub können über ein motorisch angetriebenes Antriebsmittel bewegt werden. Somit ist eine einfache Automatisierung möglich. Das erfindungsgemäße Prinzip erlaubt jedoch auch ein sicheres manuelles Einführen über die bewegliche Auflage.

Gemäß der vorliegenden Erfindung kann der Rauchstock bei seiner Bewegung in einer definierten im Wesentlichen horizontalen Ebene ausgerichtet bleiben.

Vorteilhafterweise umfasst die Rauchstockzuführung noch eine Hubeinrichtung, die den Rauchstock in ausgefahrener Position anhebt und/oder seitlich verschiebt. Die integrierte Aushebefunktion erleichtert das Abnehmen der beladenen Rauchstöcke.

Dadurch, dass bei dem erfindungsgemäßen Verfahren der Rauchstock auf einer Rauchstockaufnahme aufliegt und zum Hänger ausgerichtet wird kann der Rauchstock lagegenau in den Abnahmebereich des Hängers eingefahren werden.

Der Hänger transportiert die schleifenförmig aufgehängten Produkte, beispielsweise über Haken in den Abnahmebereich. Gemäß der vorliegenden Erfindung hat es sich als besonders vorteilhaft erwiesen zunächst den Rauchstock mit Hilfe der Auflage in den Abnahmebereich des Hängers einzufahren, während noch keine Schleifen von dem Hänger in den Aufnahmebereich transportiert wurden. Die Schleifen werden sobald der Rauchstock in Position gebracht wurde von dem Hänger über den Rauchstock in den Abnahmebereich transportiert. Es ist jedoch auch möglich zuerst die schleifenförmig aufgehängten Produkte in den Abnahmebereich zu transportieren und dann den Rauchstock in die Schleifen einzufahren.

Sobald der Rauchstock in den Schleifen positioniert ist, wird der Rauchstock angehoben und der beladene Rauchstock zu einer Rauchstockablage geführt. Die Rauchstockablage kann beispielsweise Teil eines Rauchwagens etc. sein um die Wurstschleifen nachfolgend zu behandeln.

Durch Entkoppelung der Rauchstockzuführung und Rauchstockabnahme kann während der Rauchstock zur Rauchstockablage transferiert wird bereits ein nachfolgender Rauchstock in den Hänger einfahren. Somit kann wertvolle Prozesszeit gespart werden. Vorteilhafterweise ist die Bewegung der Auflage zur Transportbewegung des Hängers synchronisiert.

Gemäß der vorliegenden Erfindung kann der Rauchstock bei seiner Bewegung in den Abnahmebereich des Hängers in einer definierten im Wesentlichen horizontalen Ebene ausgerichtet bleiben.

Die vorliegende Erfindung wird nachfolgend unter Bezugnahme der folgenden Figuren näher erläutert werden.

Die vorliegende Erfindung wird nachfolgend unter Bezugnahme der folgenden Figuren näher erläutert werden.
- Fig. 1: zeigt schematisch die wesentlichen Teile einer möglichen Ausführungsform einer Rauchstockzuführung gemäß der vorliegenden Erfindung.
- Fig. 2: zeigt schematisch eine Seitenansicht einer Rauchstockzuführung gemäß der vorliegenden Erfindung, die an einen Hänger angekoppelt ist.
- Fig. 3: zeigt schematisch eine Seitenansicht von Wurstschleifen mit eingeführten Rauchstock.
- Fig. 4: zeigt schematisch eine Seitenansicht von schleifenförmig aufgehängten Würsten, in die der Rauchstock zusammen mit dem Rauchstockeinschub eingeführt ist.
- Fig.5: zeigt in perspektivischer Darstellung schematisch ein vorderes Ende eines Rauchstocks, der in dem Rauchstockeinschub eingesetzt ist.
- Fig. 6A: zeigt in perspektivischer Darstellung das vom Hänger abgewandte Ende eines Rauchstockeinschubs ohne Rauchstock.
- Fig. 6B: zeigt den in Fig. 6A gezeigten Rauchstockeinschub mit Rauchstock.
- Fig. 7: zeigt in schematischer Darstellung eine Seitenansicht einer möglichen Ausführungsform der Rauchstockzuführung.
- Fig. 8: zeigt eine Aufsicht auf die in Fig. 7 gezeigte Rauchstockzuführung.
- Fig. 9: zeigt grob schematisch einen Rauchstockeinschub mit einer Hubeinrichtung.
- Fig. 10: zeigt Würste, die an einer Schleife aufgehängt sind

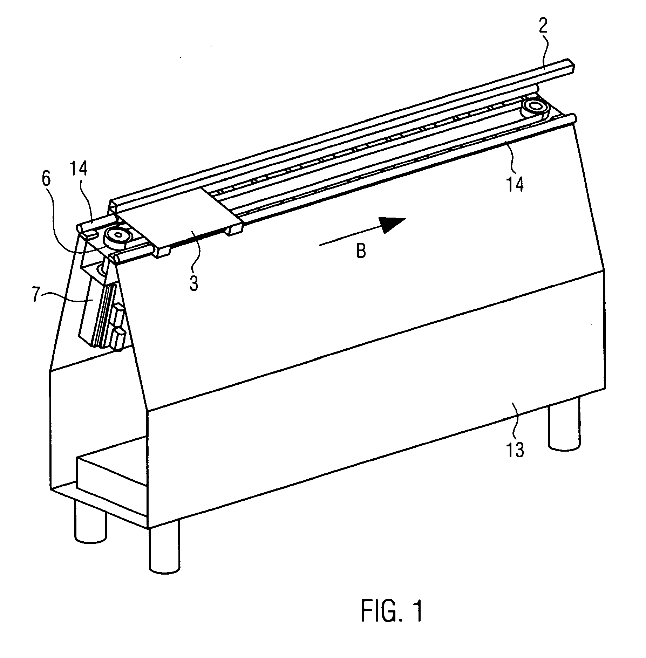

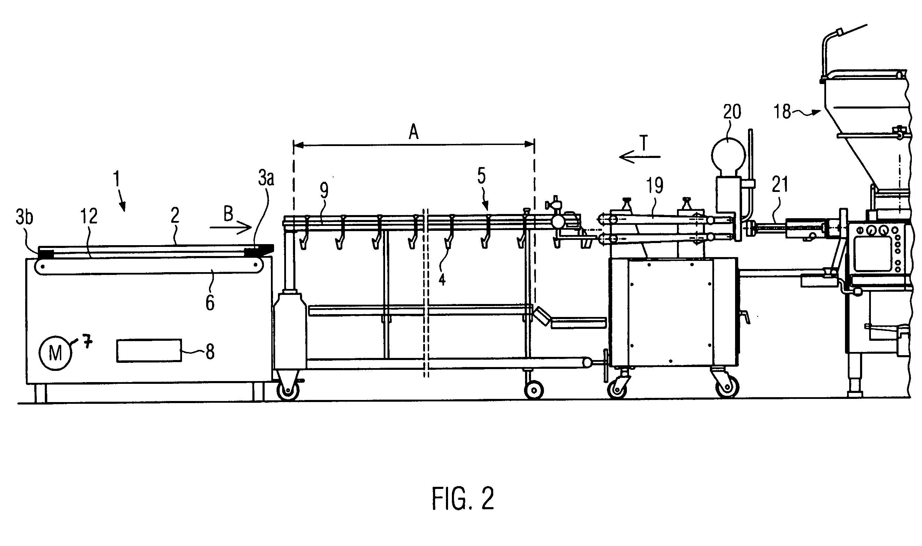

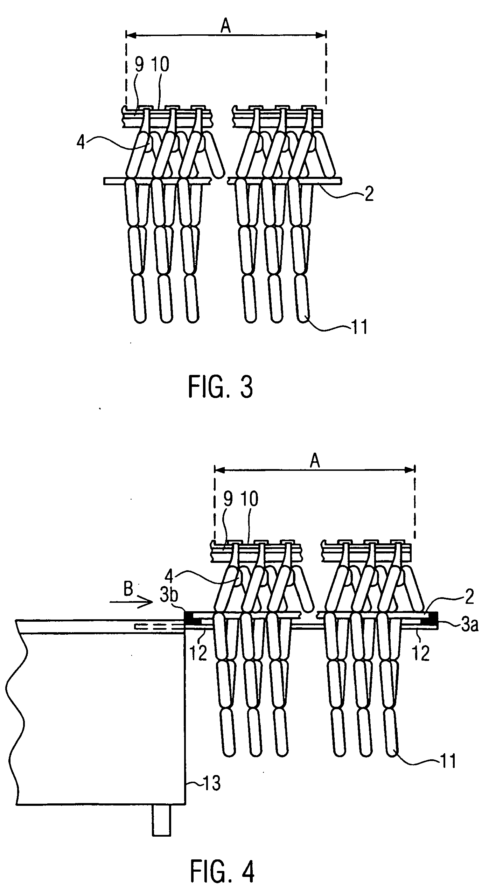

Fig. 1 zeigt in perspektivischer Darstellung die wesentlichen Bestandteile einer Rauchstockzuführung 1 gemäß der vorliegenden Erfindung. Wie aus Fig. 1 ersichtlich ist, umfasst die erfindungsgemäße Rauchstockzuführung 1 ein Gehäuse 13 an dessen oberen Ende eine Rauchstockauflage 3 vorgesehen ist, auf der ein Rauchstock 2 aufliegt und in Richtung eines Hängers 5, wie nachfolgend im Zusammenhang mit Fig. 2 beschrieben werden wird, ausgerichtet ist. Eine Ausrichteinrichtung sowie eine Halteeinrichtung sind hier nicht gezeigt. Die Rauchstockauflage 3 ist hier als fahrbarer Schlitten ausgebildet, der in den Führungen 14 läuft und über Antriebsmittel 6, hier einen Antriebsriemen, in Pfeilrichtung B oder entgegengesetzt zur Pfeilrichtung B bewegbar ist. Das Antriebsmittel 6 wird über den Motor 7 angetrieben. Durch Bewegen der Auflage 3 in Richtung B, d.h. in Richtung eines Hängers 5, auf dem Wurstschleifen oder andere Produkte in Schleifen 11 aufgehängt sind, wird der Rauchstock 2 in den Hänger 5 eingefahren. Der Schlitten 3 könnte auch manuell in der Führung 14 in Pfeilrichtung B und entgegengesetzt zur Pfeilrichtung B verschoben werden. Die in Fig. 1 gezeigte Rauchstockzuführung 1 ermöglicht ein schnelles automatisiertes Einbringen eines Rauchstocks in einen Abnahmebereich A des Hängers 5 in dem die Schleifen 11 zur Abnahme angeordnet sind. Dabei ist der Rauchstock 2 bei seiner Bewegung in einer definierten im Wesentlichen horizontalen Ebene ausgerichtet. Fig. 3 zeigt einen in den Schleifen 11 eingebrachten Rauchstock 2.

Eine bevorzugte Ausführungsform der vorliegenden Erfindung wird nachfolgend im Zusammenhang mit der Fig. 2 näher erläutert. Fig. 2 zeigt die herkömmlichen Bestandteile einer Füllvorrichtung zum Befüllen von Wursthüllen mit pastöser Masse. In bekannter Weise umfasst eine Füllmaschine einen Trichter 18 sowie ein Füllrohr 21, über die die pastöse Masse in eine Wursthülle gefüllt wird. Es kann entweder ein kontinuierlicher Strang gefertigt werden oder aber der produzierte Wurststrang wird mit einer Abdreheinheit oder einem Clipmodul 20 in Einzelwürste unterteilt. Über eine Transporteinrichtung 19 - hier aus zwei gegenüberliegenden umlaufenden Transportbändern gebildet - wird der gefüllte Wurststrang zu einem Hänger 5 gefördert, wobei der Wurststrang in bekannter Weise in Schleifen 11 an den Aufhängehaken 4 aufgehängt wird, wie insbesondere in Fig. 3 und 4 gezeigt ist. Die Aufhängehaken 4 werden in einer Führung 10 geführt und über ein Antriebselement 9, beispielsweise einen Zahnriemen oder eine Kette mit Hilfe eines nicht dargestellten Motors umlaufend angetrieben. So werden die auf den Haken 4 aufgehängten Schleifen 11 durch den Hänger 5 in einen Abnahmebereich A des Hängers 5 transportiert, in dem die Schleifen 11 durch einen Rauchstock 2, der in die Schleifen eingefahren wird abgenommen werden sollen.

In Transportrichtung T hinter dem Hänger 5 ist die erfindungsgemäße Rauchstockzuführung 1 vorgesehen.

Wie zuvor erwähnt dient die Rauchstockzuführung 1 zum lagegenauen Zuführen des Rauchstocks 2 in dem Abnahmebereich A des Hängers 5 zur Abnahme der Wurstschleifen 11.

Die Rauchstockführung 1 ist derart gestaltet, dass der Rauchstock 2 bei seiner Bewegung in den Abnahmebereich A in einer definierten im Wesentlichen horizontalen Ebene ausgerichtet ist. Die Höhe der Auflage 3, 3a, b ist dabei an die Höhe der Haken 4 und die Form der Schleifen 11 angepasst, so dass der Rauchstock 2 in einer geeigneten Höhe in den Schleifen 11 positionierbar ist. In vorteilhafter Ausgestaltung ist die Höhe der Auflage 3 höhenverstellbar. Die Auflage 3 kann großflächig ausgebildet sein, so dass mehr oder weniger der gesamte Rauchstock 2 auf der Auflage 3 aufliegt. Die Auflage 3a, b kann auch als Mehrpunktauflage ausgebildet sein, wie beispielsweise in Fig. 2 gezeigt ist. Hier umfasst die Auflage 3 zwei Auflageelemente 3a, b auf denen der Rauchstock 2 aufliegt. Wie nachfolgend näher erläutert wird, sind hier die Auflageelemente 3a, b als Teil eines Rauchstockeinschubs 12 ausgebildet, der zusammen mit dem Rauchstock 2 aus der Rauchstockzuführung 1 in den Abnahmebereich A bewegbar ist, wie auch aus Fig. 4 ersichtlich ist. Die Rauchstockzuführung 1 weist hier weiter ein Antriebselement 9 in Form eines umlaufenden Antriebsriemens 6 auf, der den Rauchstockeinschub 12 und somit den Rauchstock 2 in Pfeilrichtung B und entgegengesetzt dazu antreibt. Das Antriebselement 6 wird über den Motor 7, der von einer Steuerung 8 ansteuerbar ist, angetrieben. Wie insbesondere aus den Fig. 2 und 4 hervorgeht ist gemäß dem in Fig. 2 gezeigten Ausführungsbeispiel die Auflage 3a, b als Teil des Rauchstockeinschubs 12 ausgebildet, der zusammen mit dem Rauchstock 2 aus der Rauchstockzuführung 1 über das Ende des Gehäuses 13 in den Abnahmebereich A bewegt wird. Diese Ausführungsform ermöglicht ein besonders stabiles und lagegenaues Einbringen des Rauchstocks 2 zwischen die Schleifen 11.

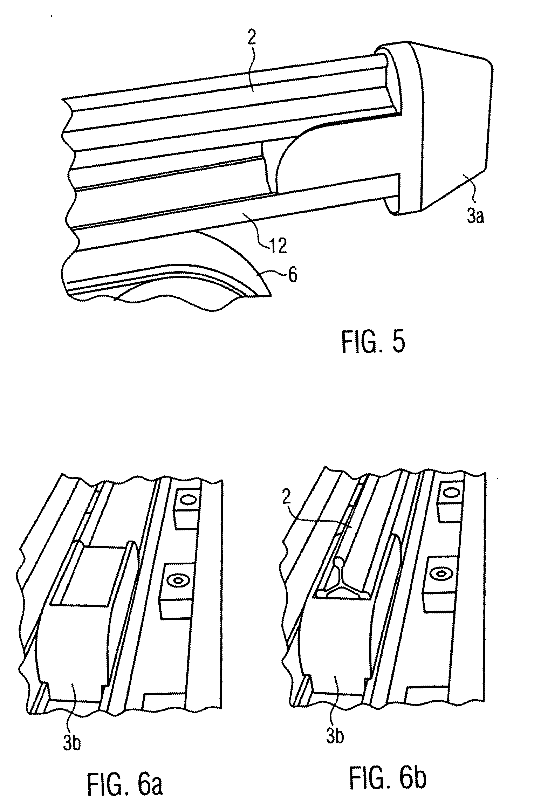

Der Aufbau des Rauchstockeinschubs 12 wird nachfolgend im Zusammenhang mit den Fig. 5 bis 8 näher erläutert.

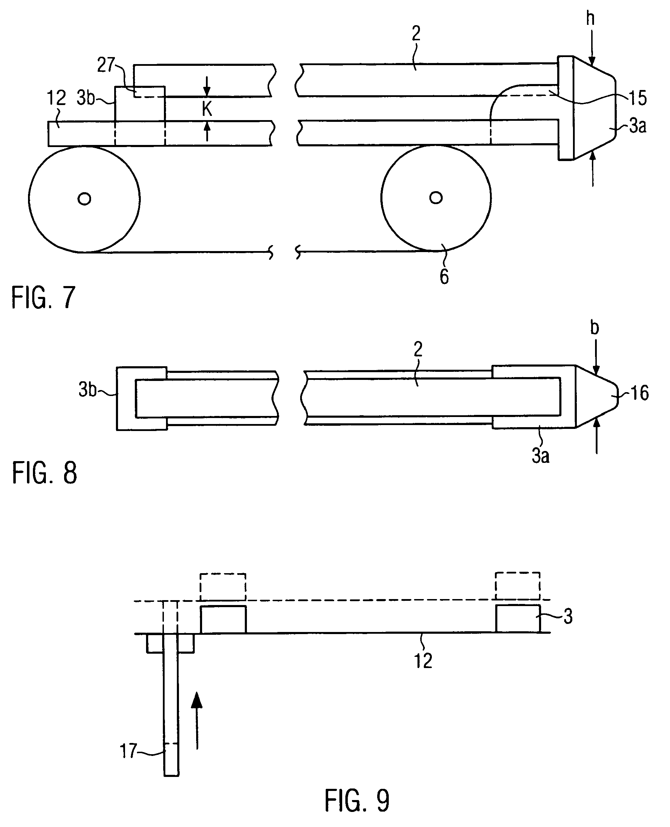

Wie insbesondere aus der Fig. 7 hervorgeht, die eine Seitenansicht eines Teils der erfindungsgemäßen Rauchstockzuführung 1 zeigt, umfasst der Rauchstockeinschub 12 eine Aufnahme 23 für die Auflageelemente 3a und 3b. Die Aufnahme 23 ist in diesem Ausführungsbeispiel beispielsweise U-förmig ausgebildet, wobei die Auflageelemente 3a, b einfach in die Aufnahme 23 eingesteckt werden.

Wie aus den Fig. 5 bis 8 hervorgeht ist das vordere Ende 16 des Rauchstockeinschubs 12 als integrierte Führungsspitze ausgebildet. In dieser Ausführungsform ist dabei das Auflageelement 3a derart ausgebildet, dass es am vorderen Ende 16, das dem Hänger 5 zugewandt ist, spitz zuläuft. Dabei verringert sich z.B. die Breite b der Führungsspitze in Richtung Hänger 5, wie in Fig. 8 angedeutet ist. Weiter ist es auch möglich, dass sich die Höhe h in Richtung zum Hänger 5 hin verringert (siehe Fig. 7). Eine solche Führungsspitze ermöglicht ein besonders einfaches und schonendes Einfädeln des Rauchstockeinschubs 12 in die Schleifen 11. Dadurch, dass die Führungsspitze nicht auf den Rauchstock 2 aufgeschoben ist, sondern als Teil des Rauchstockeinschubs 12 ausgebildet ist, entfällt ein zeitraubendes Aufstecken einer solchen Spitze auf den Rauchstock 2. Dadurch, dass hier die Auflage 3, d.h. das vordere Auflageelement 3a, als Führungsspitze ausgebildet ist, kann diese auch einfach für unterschiedliche Prozesse ausgetauscht werden.

Die Auflage 3, hier das Element 3a ist, wie insbesondere aus den Fig. 5 bis 8 hervorgeht, derart ausgebildet, dass der Rauchstock 2 zumindest teilweise seitlich und zumindest teilweise an seinem vorderen Ende 16, das den Hänger zugewandt ist, durch die Auflage eingefasst ist. Die Auflage 3 weist dafür eine Aussparung 15 (siehe Fig. 7) auf, in die der Rauchstock 2 eingesetzt ist. Somit wird der Rauchstock 2 gegen Verschieben zur Seite und nach vorne gesichert. Durch die Aussparung 22 (Fig. 7) im hinteren Auflageelement 3B kann der Rauchstock 2 auch vor einem Verrutschen nach hinten gesichert werden.

Dadurch, dass die Auflage 3 als auswechselbares Element bzw. durch auswechselbare Elemente 3a, b gefertigt ist, kann durch einfaches Austauschen der Auflage 3 die Rauchstockzuführung 1 an unterschiedliche Rauchstockformen angepasst werden, ohne dass ein komplizierter Umrüstprozess erforderlich ist. In den Fig. 5 bis 8 umfasst die Auflage 3 zwei Auflageelemente 3a, b. Die Auflage 3 kann jedoch auch mehrere Auflageelemente umfassen oder als großflächige einstückige Auflage gebildet sein.

Der Rauchstockeinschub 12 wird bei seiner Bewegung über das Antriebsmittel 6 durch eine Führung 14 geführt, die der Einfachheit halber in den Fig. 5 bis 8 nicht dargestellt ist. Zwischen Rauchstock 2 und Aufnahme 23 verbleibt ein Zwischenraum k, der das Abgreifen des Rauchstocks ermöglicht.

Wie durch die Fig. 9 angedeutet ist, kann die Rauchstockzuführung 1 eine Hubeinrichtung 17 umfassen, die den Rauchstockeinschub 12 in seiner ausgefahrenen Position nach oben und/oder seitlich, d.h. in Richtung der Aufhängehaken 4 bewegt um so die Abnahme zu vereinfachen. Die Hubeinrichtung 17 kann beispielsweise seitlich neben dem Antriebsmittel 6 angreifen.

Die Auflage 3 kann vorteilhafterweise aus einem Kunststoff gefertigt sein.

Die Steuerung 8 kann so ausgelegt werden, dass sie die Funktionen der Rauchstockzuführung und die Funktionen des Hängers 5 synchronisiert.

Das erfindungsgemäße Verfahren wird nachfolgend im Zusammenhang mit den beigefügten Figuren näher erläutert.

Die erfindungsgemäße Rauchstockzuführung 1 kann an ein Rauchstockvereinzelungs- und Transportsystem angebunden sein, das die Rauchstöcke 2 auf die Auflage 3 transportiert. Dabei kann der Rauchstock 2 beispielsweise von hinten in Richtung Hänger 5 über die Auflage 3 geschoben werden. Durch die Aussparung 15 wird der Rauchstock dann entsprechend gehalten und ausgerichtet. Es ist jedoch auch eine Anbindung an einen manuell beschickten Rauchstockbunker möglich. Weiter ist die Integration eines Rauchstockmagazins mit oder ohne Rauchstockvereinzelung in der Rauchstockzuführung 1 denkbar.

Gemäß einer ersten Ausführungsform der vorliegenden Erfindung wird das Antriebsmittel 6 von dem Motor 7 angetrieben und bewegt den Rauchstock 2, der auf der Auflage 3 aufliegt in den Abnahmebereich A des Hängers 5, in dem noch keine Wurstschleifen 11 antransportiert wurden. Gemäß der in Fig. 2 und Fig. 4 gezeigten Ausführungsform wird dabei der Rauchstock 2 zusammen mit dem Rauchstockeinschub 12 in den Abnahmebereich A gefördert. Die wie zuvor beschrieben erzeugten Wurstschleifen 11 werden von einer Übergabeeinheit des Hängers 5 von der Transporteinrichtung 19 in Schleifen 11 in bekannter Weise übernommen und in Transportrichtung T über den positionierten Rauchstock 2 geführt. Ist eine vorbestimmte Anzahl an Schleifen 11 über den Rauchstock 2 transportiert worden, wird der Rauchstock 2 angehoben und der beladene Rauchstock zu einer Rauchstockablage geführt. Dies kann beispielsweise über zwei nicht dargestellte Greifer eines Handhabungssystems erfolgen, die am linken und rechten seitlichen Endbereich des Rauchstocks den Rauchstock 2 greifen und abtransportieren. Das Greifelement kann den Rauchstock 2 gut greifen, da unterhalb des aufliegenden Rauchstocks 2 ein Freiraum k gebildet wird, in den ein Greifer gut eingreifen kann.

Nach Abnahme des beladenen Rauchstocks 2 kann die Auflage 3 in entgegengesetzter Richtung vom Hänger 5 wegbewegt werden und mit einem neuen Rauchstock 2 beladen werden. Noch während der Rauchstock 2 zur Rauchstockablage transferiert wird, kann bereits ein nachfolgender Rauchstock 2 in den Hänger 5 einfahren. Dies kann die Prozessgeschwindigkeit erheblich erhöhen. Somit kann ein schnelles und automatisiertes Einbringen des Rauchstocks 2 in die Wurstschleifen 11 ermöglicht werden. Die Hängerbewegung kann synchronisiert zur Rauchstockbewegung und zur Bewegung der Greifer erfolgen. Durch die Einführspitze ist ein schonendes Einbringen des Rauchstocks in die Wurstschleifen 11 möglich. Eine Reduktion der Handhabungszeit für den Roboter oder das Handhabungsgerät (nicht dargestellt) ist durch vom Roboter entkoppeltes Einführen des Rauchstocks 2 möglich.

Alternativ zu dem oben gezeigten Verfahren ist es auch möglich, dass der Hänger 5 zunächst die an den Haken 4 hängenden Wurstschleifen 11 in den Abnahmebereich A fördert und die Rauchstockzuführung dann den Rauchstock 2 durch Bewegen der Auflage 3 in den Aufnahmebereich A in die Schleifen 11 einfädelt.

Die vorliegende Erfindung wurde hier im Zusammenhang mit in Schleifen aufgehängten Würsten beschrieben. Selbstverständlich eignet sich die vorliegende Erfindung gleichermaßen für die lagegenaue Zuführung von Stöcken in andere in Schleifen auf einen Hänger 5 aufgehängten Produkte, wie beispielsweise Käse, Süßwaren etc.

Die vorherigen Ausführungsformen wurden in Zusammenhang mit Wurstschleifen erläutert, in die der Rauchstock eingefädelt wird.

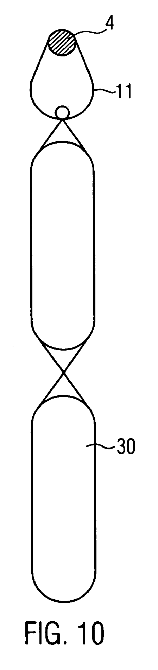

Es ist jedoch auch möglich, wie in Fig. 10 gezeigt ist, Würste 30 oder andere Produkte an einer Schleife 11, die zusätzlich als Aufhängeschleife angebracht (z.B. durch das Clipmodul 20 eingeclippt) wurde, an den Haken 4 aufzuhängen, wobei der Rauchstock dann in die Schleifen 11 einfährt.

## Patentansprüche

1. Rauchstockzuführung (1) zum lagegenauen Positionieren von einem Rauchstock (2) in Wurstschleifen (11) oder in andere in Schleifen auf einem Hänger (5) aufgehängte Produkte (11), **gekennzeichnet durch**
eine Rauchstockauflage (3), auf der der Rauchstock (2) zumindest teilweise aufliegt und in Richtung Hänger (5) ausgerichtet ist und die derart verschiebbar ist, dass der Rauchstock (2) im Wesentlichen in Längsrichtung (B) aus der Rauchstockzuführung (1) in einen Abnahmebereich (A) des Hängers (5), in dem die Schleifen (11) bei der Abnahme angeordnet sind, ausgefahren wird, wobei die Auflage (3) als Teil eines Rauchstockeinschubs (12) ausgebildet ist, der zusammen mit dem Rauchstock (2) aus der Rauchstockzuführung (1) in den Aufnahmebereich (A) bewegbar ist.

2. Rauchstockzuführung nach Anspruch 1, **dadurch gekennzeichnet, dass** die Auflage (3) als mindestens ein auswechselbares Auflageelement (3, 3a, b) in dem Rauchstockeinschub ausgebildet ist.

3. Rauchstockzuführung (1) nach Anspruch 1, **dadurch gekennzeichnet, dass** das vordere Ende (16) des Rauchstockeinschubs (12) als integrierte Führungspitze ausgebildet ist.

4. Rauchstockzuführung (1) nach Anspruch 2 und 3, **dadurch gekennzeichnet, dass** das Auflageelement (3, 3a, 3b) als integrierte Führungsspitze ausgebildet ist.

5. Rauchstockzuführung (1) nach mindestens einem der Ansprüche 1 bis 4, **dadurch gekennzeichnet, dass** die Auflage (3) derart ausgebildet ist, dass der Rauchstock zumindest teilweise seitlich und zumindest teilweise an seinem vorderen Ende (16), das dem Hänger (5) zugewandt ist, eingefasst ist.

6. Rauchstockzuführung (1) nach Anspruch 1, **dadurch gekennzeichnet, dass** die Auflage (3) bzw. der Rauchstockeinschub (12) über ein motorisch angetriebenes Antriebsmittel (6) bewegt werden.

7. Rauchstockzuführung (1) nach Anspruch 1, **dadurch gekennzeichnet, dass** die Auflage bzw. der Rauchstockeinschub (12) manuell bewegbar sind.

8. Rauchstockzuführung (1) nach mindestens einem der Ansprüche 1 bis 7, **dadurch gekennzeichnet, dass** der Rauchstock (2) bei seiner Bewegung in den Abnahmebereich (A) in einer definierten im Wesentlichen horizontalen Ebene ausgerichtet ist.

9. Rauchstockzuführung (1) nach mindestens einem der Ansprüche 1 bis 8, **dadurch gekennzeichnet, dass** die Rauchstockzuführung (1) weiter eine Hubeinrichtung (17) umfasst, die den Rauchstock (2) in seiner ausgefahrenen Position anhebt und/oder seitlich verschiebt.

10. Verfahren zum lagegenauen Zuführen eines Rauchstocks (2) in Wurstschleifen oder andere in Schleifen (11) auf einem Hänger (5) aufgehängten Produkten **gekennzeichnet durch**
Auflegen und Ausrichten eines Rauchstocks (2) auf eine Auflage (3, 3a, 3b) einer Rauchstockzuführung (1), wobei die Auflage (3) als Teil eines Rauchstockeinschubs (12) ausgebildet ist,
Bewegen des Rauchstockeinschubs (12) im Wesentlichen in Längsrichtung des Rauchstocks (2), so dass der Rauchstockeinschub (12) zusammen mit dem Rauchstock (2) in den Abnahmebereich (A) des Hängers (5), in dem die Schlaufen (11) bei der Abnahme angeordnet sind, einfährt.

11. Verfahren nach Anspruch 10, **dadurch gekennzeichnet, dass** der Hänger (5) die aufgehängten Produkte in den Abnahmebereich (A) transportiert und entweder
der Rauchstock (2) in die in dem Abnahmebereich (A) bereits aufgehängten Schleifen, auf der Auflage (3, 3a, 3b) aufliegend ,einfährt oder dass
der Rauchstock (2) zuerst auf der Auflage (3, 3a, 3b) aufliegend in den Abnahmebereich (A) des Hängers einfährt und die Schleifen (11) von dem Hänger (5) über den Rauchstock (2) bewegt werden.

12. Verfahren nach Anspruch 10 oder 11, **dadurch gekennzeichnet, dass**, sobald der Rauchstock (2) in den Schleifen (11) positioniert ist, der Rauchstock (2) angehoben wird und der beladene Rauchstock (2) zu einer Rauchstockablage geführt und/oder seitlich verschoben wird.

13. Verfahren nach Anspruch 12, **dadurch gekennzeichnet, dass** nach Abnahme des beladenen Rauchstocks (2) die Auflage (3, 3a, 3b) in entgegengesetzter Richtung vom Hänger (5) wegbewegt wird und mit einem neuen Rauchstock (2) beladen wird.

14. Verfahren nach Anspruch 10 und 11, **dadurch gekennzeichnet, dass** während der Rauchstock (2) zur Rauchstockablage transferiert wird, bereits ein nachfolgender Rauchstock (2) in den Hänger (5) einfährt.

15. Verfahren nach mindestens einem der Ansprüche 10 bis 14, **dadurch gekennzeichnet, dass** die Bewegung der Auflage zur Transportbewegung des Hängers (5) synchronisiert ist.

16. Verfahren nach mindestens einem der Ansprüche 10 bis 15, **dadurch gekennzeichnet, dass** der Rauchstock (2) bei seiner Bewegung in den Abnahmebereich (A) des Hängers (5) in einer definierten im Wesentlichen horizontalen Ebene ausgerichtet ist.

## Claims

1. A smoking rail feed means (1) for accurately positioning a smoking rail (2) in sausage loops (11) or in loops (11) of other products suspended from a hanger (5), **characterized by**
a smoking rail support (3) on which the smoking rail (2) rests, at least partially, and is oriented in the direction of the hanger (5), said smoking rail support (3) being adapted to be displaced such that the smoking rail (2) is transferred substantially in the longitudinal direction (B) from the smoking rail feed means (1) to a pick-up area (A) of the hanger (5), in which the loops (11) are arranged when they are being picked up, the support (3) being implemented as part of a smoking rail insertion unit (12) which is adapted to be moved, together with the smoking rail (2), out of the smoking rail feed means (1) and into the pick-up area (A).

2. A smoking rail feed means (1) according to claim 1, **characterized in that** the support (3) is implemented as at least one replaceable support element (3, 3a, 3b) in said smoking rail insertion unit.

3. A smoking rail feed means (1) according to claim 1, **characterized in that** the front end (16) of the smoking rail insertion unit (12) is implemented as an integrated guide tip.

4. A smoking rail feed means (1) according to claims 2 and 3, **characterized in that** the support element (3, 3a, 3b) is implemented as an integrated guide tip.

5. A smoking rail feed means (1) according to at least one of the claims 1 to 4, **characterized in that** the support (3) is implemented such that the smoking rail is encompassed at least partially on its sides and at least partially on its front end (16), which faces the hanger (5).

6. A smoking rail feed means (1) according to claim 1, **characterized in that** the support (3) and the smoking rail insertion unit (12), respectively, are moved by a motor-driven drive means (6).

7. A smoking rail feed means (1) according to claim 1, **characterized in that** the support and the smoking rail insertion unit (12), respectively, are adapted to be moved by hand.

8. A smoking rail feed means (1) according to at least one of the claims 1 to 7, **characterized in that** the smoking rail (2), when moving into the pick-up area (A), is oriented in a defined, substantially horizontal plane.

9. A smoking rail feed means (1) according to at least one of the claims 1 to 8, **characterized in that** the smoking rail feed means (1) additionally comprises a lifting means (17), which, in the transferred position of the smoking rail (2), raises said smoking rail (2) and/or displaces it to the side.

10. A method of accurately feeding a smoking rail (2) into sausage loops or into loops (11) of other products suspended from a hanger (5), **characterized by**
positioning and orienting a smoking rail (2) on a support (3, 3a, 3b) of a smoking rail feed means (1), the support (3) being implemented as part of a smoking rail insertion unit (12),
moving the smoking rail insertion unit (12) substantially in the longitudinal direction of the smoking rail (2) so that the smoking rail insertion unit (12), together with the smoking rail (2), will be introduced into the pick-up area (A) of the hanger (5), in which the loops (11) are arranged when they are being picked up.

11. A method according to claim 10, **characterized in that** the hanger (5) conveys the suspended products into the pick-up area (A) and
that the smoking rail (2) is either introduced, in a condition in which it rests on the support (3, 3a, 3b), into the loops which are already suspended in said pick-up area (A), or
that the smoking rail (2) is first moved, in a condition in which it rests on the support (3, 3a, 3b), into the pick-up area (A) of the hanger and that the loops (11) are then moved by the hanger (5) across the smoking rail (2).

12. A method according to claim 10 or 11, **characterized in that**, as soon as the smoking rail (2) has been positioned in the loops (11), the smoking rail (2) is raised, and that the laden smoking rail (2) is guided to a smoking rail rack and/or displaced to the side.

13. A method according to claim 12, **characterized in that**, when the laden smoking rail (2) has been removed, the support (3, 3a, 3b) is moved away from the hanger (5) in the opposite direction and laden with a new smoking rail (2).

14. A method according to claims 10 and 11, **characterized in that**, a subsequent smoking rail (2) is already introduced in the hanger (5), while the preceding smoking rail (2) is still being transferred to the smoking rail rack.

15. A method according to at least one of the claims 10 to 14, **characterized in that** the movement of the support is synchronized with the conveying movement of the hanger (5).

16. A method according to at least one of the claims 10 to 15, **characterized in that** the smoking rail (2), when moving into the pick-up area (A) of the hanger (5), is oriented in a defined, substantially horizontal plane.

## Revendications

1. Arrivée de barre de fumoir (1) pour le positionnement précis d'une barre de fumoir (2) dans des boucles de saucisses (11) ou dans d'autres produits (11) accrochés en boucles sur un dispositif d'accrochage (5), **caractérisée par**
un support de barre de fumoir (3), sur lequel s'applique au moins en partie la barre de fumoir (2) et est orientée en direction du dispositif d'accrochage (5), et qui peut être déplacé de telle sorte que la barre de fumoir (2) est sortie, essentiellement dans la direction longitudinale (B), de l'arrivée de barre de fumoir (1) dans une zone de réception (A) du dispositif d'accrochage (5), dans lequel les boucles (11) sont disposées lors de la reprise, le support (3) étant réalisé sous forme de partie d'un dispositif d'insertion de barre de fumoir (12), qui peut être déplacé avec la barre de fumoir (2) de l'arrivée de barre de fumoir (1) dans la zone de réception (A).

2. Arrivée de barre de fumoir suivant la revendication 1, **caractérisée en ce que** le support (3) est réalisé sous forme d'au moins un élément d'appui (3, 3a, 3b) interchangeable dans le dispositif d'insertion de barre de fumoir.

3. Arrivée de barre de fumoir (1) suivant la revendication 1, **caractérisée en ce que** l'extrémité avant (16) du dispositif d'insertion de barre de fumoir (12) est réalisée sous forme de pointe de guidage intégrée.

4. Arrivée de barre de fumoir (1) suivant les revendications 2 et 3, **caractérisée en ce que** l'élément d'appui (3, 3a, 3b) est réalisé sous forme de pointe de guidage intégrée.

5. Arrivée de barre de fumoir (1) suivant l'une au moins des revendications 1 à 4, **caractérisée en ce que** le support (3) est réalisé de telle sorte que la barre de fumoir est cerclée au moins en partie latéralement et au moins en partie sur son extrémité avant (16), tournée vers le dispositif d'accrochage (5).

6. Arrivée de barre de fumoir (1) suivant la revendication 1, **caractérisée en ce que** le support (3) ou le dispositif d'insertion de barre de fumoir (12) est déplacé par l'intermédiaire d'un moyen d'entraînement (6) motorisé.

7. Arrivée de barre de fumoir (1) suivant la revendication 1, **caractérisée en ce que** le support ou le dispositif d'insertion de barre de fumoir (12) est déplaçable manuellement.

8. Arrivée de barre de fumoir (1) suivant l'une au moins des revendications 1 à 7, **caractérisée en ce que** la barre de fumoir (2) est orientée, lors de son déplacement dans la zone de réception (A), dans un plan défini essentiellement horizontal.

9. Arrivée de barre de fumoir (1) suivant l'une au moins des revendications 1 à 8, **caractérisée en ce que** l'arrivée de barre de fumoir (1) comprend en outre un dispositif de levage (17), qui relève la barre de fumoir (2) dans sa position de sortie et/ou la déplace latéralement.

10. Procédé d'arrivée, d'un positionnement précis, d'une barre de fumoir (2) dans des boucles de saucisses ou autres produits accrochés en boucles (11) sur un dispositif d'accrochage (5), **caractérisé par**
la pose et l'orientation d'une barre de fumoir (2) sur un support (3, 3a, 3b) d'une arrivée de barre de fumoir (1), le support (3) étant réalisé sous forme de partie d'un dispositif d'insertion de barre de fumoir (12),
le déplacement du dispositif d'insertion de barre de fumoir (12) essentiellement dans la direction longitudinale de la barre de fumoir (2), de sorte que le dispositif d'insertion de barre de fumoir (12) rentre, avec la barre de fumoir (2), dans la zone de réception (A) du dispositif d'accrochage (5), dans lequel sont disposées les boucles (11) lors de la reprise.

11. Procédé suivant la revendication 10, **caractérisé en ce que** le dispositif d'accrochage (5) transporte les produits accrochés dans la zone de réception (A) et soit
la barre de fumoir (2) rentre dans les boucles, déjà accrochées dans la zone de réception (A), en s'appliquant sur le support (3, 3a, 3b), soit
la barre de fumoir (2) rentre d'abord dans la zone de réception (A) du dispositif d'accrochage, en s'appliquant sur le support (3, 3a, 3b), et les boucles (11) sont déplacées par le dispositif d'accrochage (5) sur la barre de fumoir (2).

12. Procédé suivant l'une des revendications 10 et 11, **caractérisé en ce que**, dès que la barre de fumoir (2) est positionnée dans les boucles (11), la barre de fumoir (2) est relevée et la barre de fumoir (2) chargée est guidée en direction d'un dépôt de barre de fumoir et/ou déplacée latéralement.

13. Procédé suivant la revendication 12, **caractérisé en ce que**, après la réception de la barre de fumoir (2) chargée, le support (3, 3a, 3b) est déplacé à l'écart du dispositif d'accrochage (5) dans la direction contraire et chargé d'une nouvelle barre de fumoir (2).

14. Procédé suivant l'une des revendications 10 et 11, **caractérisé en ce que**, pendant le transfert de la barre de fumoir (2) en direction de son dépôt, une barre de fumoir (2) suivante rentre déjà dans le dispositif d'accrochage (5) .

15. Procédé suivant l'une au moins des revendications 10 à 14, **caractérisé en ce que** le déplacement du support est synchronisé avec le mouvement de transport du dispositif d'accrochage (5).

16. Procédé suivant l'une au moins des revendications 10 à 15, **caractérisé en ce que** la barre de fumoir (2), lors de son déplacement dans la zone de réception (A) du dispositif d'accrochage (5), est orientée dans un plan défini essentiellement horizontal.
